# EUROPEAN PATENT APPLICATION

(11) **EP 4 640 448 A1**
(43) Date of publication of application: **29.10.2025**
(21) Application number: 24171844.4
(22) Date of filing: 23.04.2024
(51) Int. Cl.: B60C 11/24

(54) **TIRE MONITORING METHOD, CONTROL UNIT, VEHICLE AND COMPUTER PROGRAM PRODUCT**

(71) Applicant: ZF CV Systems Europe BV, 1170 Brüssel (BE)
(72) Inventor: THAZHATHETHIL MUSTHAFA, Mohammed Sagheer, 600125 Chennai (IN)
(74) Representative: Ohlendorf, Henrike

(57) **Abstract**

The invention relates to a tire monitoring method (100) for estimating tire wear (11) of a tire (10) of a vehicle (50), the vehicle (50) comprising a control unit (30) and the tire monitoring method (100) comprising the steps of receiving (110), at the control unit (30), a tire parameter (12a) provided by a tire sensor (12) associated with the tire (10), receiving (120), at the control unit (30), a driving dynamics parameter (13a) provided by a driving dynamics sensor (13) of the vehicle (50) and estimating (130), by means of the control unit (30), tire wear (11) of the tire (10) based on the tire parameter (12a) and the driving dynamics parameter (13a).

Furthermore, the invention relates to a control unit (30) configured to carry out the tire monitoring method (100) and to a vehicle (50), in particular a commercial vehicle (50a), comprising a tire (10), a tire sensor (12), a driving dynamics sensor (13) and such a control unit (30).

## Description

The present disclosure relates to a tire monitoring method for estimating tire wear of a tire of a vehicle and to a control unit configured to carry out the tire monitoring method. Furthermore, the present disclosure relates to a vehicle, in particular a commercial vehicle, and to a computer program product.

According to current practice, estimating a present tire wear of a tire of a vehicle is usually performed by visual inspection, e.g. by a vehicle driver or by maintenance personnel. Evolved approaches for technology-assisted tire wear estimation may comprise camera-assisted inspection methods using digital image processing. For instance, US 2021/0156675 A1 describes a method for assessing tire tread depth and/or tire condition by taking and analysing a camera image of a tire using portable instrumentation. Still, camera-assisted inspection methods require sequential individual imaging of the tires to be inspected. Thus, current tire wear estimation concepts may result in time-consuming and laborious processes leading to reduced operational availability of the associated vehicle.

Furthermore, sensor-based tire monitoring concepts for monitoring tire pressure of a tire of a vehicle are generally known. For instance, WO 2023/052109 A1 relates to a method for controlling a tire pressure monitoring system of a vehicle, the tire pressure monitoring system comprising tire pressure sensor modules transmitting data sets at predefined time intervals to a receiving unit which is configured to perform a detection function for assigning the data sets to specific wheel positions. Generally, tire pressure monitoring systems (TPMS) are limited to pressure monitoring for related driving safety and efficiency.

It may be desirable to provide technical approaches which allow for an increased efficiency of tire wear estimation processes. In view of the above, it is a general object of the present invention to address one or more of the disadvantages associated with the prior art. In particular, it is an object of the present invention to provide a tire monitoring method which allows for tire wear estimation in a time-efficient and comfortable manner. It is a further object of the present invention to provide suitable devices and means configured to carry out the presented tire monitoring method.

Aspects and embodiments of the invention provide a tire monitoring method for estimating tire wear of a tire of a vehicle, a control unit configured to carry out the tire monitoring method, a vehicle and a computer program product as indicated in the appended claims.

According to a first aspect of the present invention, there is provided a tire monitoring method for estimating tire wear of a tire of a vehicle, the vehicle comprising a control unit and the tire monitoring method comprising the steps of
- receiving, at the control unit, a tire parameter provided by a tire sensor associated with the tire,
- receiving, at the control unit, a driving dynamics parameter provided by a driving dynamics sensor of the vehicle and
- estimating, by means of the control unit, tire wear of the tire based on the tire parameter and the driving dynamics parameter.

In conclusion, a sensor-based tire monitoring method for estimating tire wear is provided which is intended to use a combination of a measurable tire parameter and a driving dynamics parameter representing driving conditions of an associated vehicle in order to assess a present tire wear of a tire of the vehicle. In other words, the presented tire monitoring method enables tire wear estimation by using vehicular data generated upon vehicle operation. Hence, estimating tire wear may be efficiently automated and decoupled from a visual inspection process or at least used to optimize time intervals between visual inspections. For instance, the presented tire monitoring method may reduce manual checks and ensure timely notifications of predefined tire wear levels, thus providing a beneficially time-saving monitoring concept. This may lead to an increased comfort of the vehicle driver and to a higher operational availability of the vehicle. In contrast to sequential visual inspections of each individual tire, the presented tire monitoring method allows for a substantially simultaneous analysis of a plurality of tires of the vehicle. Furthermore, the suggested tire monitoring method presents an on-board method which may be carried out during operation of the vehicle, thus providing a precise in situ monitoring concept which may comprise updating a tire wear status in near real-time. Nevertheless, it may be also possible to collect and save the above-mentioned sensor data for later tire wear estimation. The sensor data used to estimate tire wear may be provided by sensors already present on the vehicle, thus minimizing implementation effort of the suggested tire monitoring method. In other words, the tire sensor and the driving dynamics sensor may be associated with further vehicular systems and the measured sensor data may be shared with the control unit via a suitable signal connection.

Within the present disclosure, the tire monitoring method may refer to a single tire, to a group of tires or to all tires of the vehicle on which the tire monitoring method is carried out. Generally, the tire parameter and the driving dynamics parameter may be selectively analysed and evaluated individually for each tire or commonly for a plurality of tires.

In accordance with the first aspect of the invention, a control unit of the vehicle associated with the tire monitoring method receives the tire parameter and the driving dynamics parameter for estimating tire wear. The control unit may, for instance, be a dedicated control unit for the described tire monitoring method or a higher-level control unit combining various vehicular control functions. The control unit may, for instance, receive the tire parameter directly from the tire sensor or via a further control device associated with the tire sensor, e.g., a TPMS control device. The control unit may, for instance, receive the driving dynamics parameter directly from the driving dynamics sensor or via a further control device associated with the driving dynamics sensor, e.g., a driving dynamics control device. Generally, the control unit may be any suitable vehicular control unit and, for instance, implemented as a vehicular on-board computer. According to an embodiment, the control may be a so-called telematics control unit, which may be an electronic control unit (ECU) with extended telecommunication functions.

The process of estimating tire wear of the tire based on the tire parameter and the driving dynamics parameter may, for instance, comprise calculating an estimated tire wear according to a given tire wear model. Furthermore, the estimated tire wear may be classified for simplified further processing, e.g., classified according to predefined tire wear classification levels or ranges. The classification levels or ranges may be assignable to predefined evaluation results for facilitating an adequate control unit reaction such as issuance of a warning notification. The estimated tire wear, in particular the classified tire wear level or range, or an assigned evaluation result may, for instance, be output to a vehicle driver of the vehicle, for instance using a visual output device and/or an audio output device. Optionally, the control unit may provide a visualization on a screen perceptible by the driver. According to a non-limiting example, the visualization may comprise a tire wear level information in combination with a wheel arrangement image for simplified tire identification.

According to an embodiment of the first aspect of the present invention, the tire parameter is at least one of a tire pressure and tire temperature. The tire pressure and the tire temperature may be considered as tire parameters with a direct correlation to tire wear and these tire parameters may be easily measured and processed. The tire sensor may be configured to sense both the tire pressure and the tire temperature by suitable sensor elements, thus eliminating the need for separate tire sensors. For instance, a plurality of tire wear estimation models according to various tire temperature ranges or various tire pressure ranges may be provided to the control unit and applied to a predefined model calculation scheme. Additionally or alternatively, at least one of the tire temperature and the tire pressure may present a calculation factor in a predefined factor calculation scheme.

According to an embodiment of the first aspect of the present invention, the driving dynamics parameter may be at least one of a braking parameter, a steering parameter, an acceleration parameter and a vehicle stability parameter. These driving dynamics parameters may provide reliable criteria for estimating tire wear due to an associated individual impact of each given driving dynamics parameter on the tire. Furthermore, these driving dynamics parameters may be easily measured and processed and associated sensors or control devices configured to provide the driving dynamics parameters mentioned above may be readily available on the vehicle without major implementation effort. A braking parameter may, for instance, be a brake pedal position and/or a braking pressure. The braking parameter may be provided by a vehicular brake control device to the control unit. A steering parameter may, for instance, be a steering wheel angle and/or a number of steering wheel turns. The steering parameter may be provided by a vehicular steering control device to the control unit. An acceleration parameter may, for instance, be an accelerator pedal position and/or a vehicle acceleration value. The acceleration parameter may be provided by a drive control device to the control unit. A vehicle stability parameter may refer to at least one of a stability indicator and a stabilization event. For instance, regarding a stabilization event, an activation status and/or history of an anti-lock braking system (ABS), of an automatic traction control system (ATC) or of an electronic stability control system (ESC), the ESC for instance comprising at least one of a roll stability control function and/or a yaw control function, may be analysed in order to determine a vehicle stability parameter. Alternatively or Additionally, the vehicle stability parameter may be based on inertial measurement data such as e.g. a lateral acceleration signal, which may represent a stability indicator. The vehicle stability parameter may be provided by an associated driver assistance system or a vehicle stability control device to the control unit. According to a non-limiting example, the control unit may furthermore record wheel slips and/or wheel speeds of the individual wheels of the vehicle during turns, braking situations and/or lane manoeuvres for determining and evaluating one or more vehicle stability parameters. For instance, if a particular wheel or a set of wheels tends to slip for a longer duration than other wheels, the particular wheel or the set of wheels may be marked to be checked and a notification may be issued to a recipient, e.g., the vehicle driver or a fleet operator.

According to an embodiment of the first aspect of the present invention, the tire monitoring method may further comprise the steps of
- receiving, at the control unit, an environmental parameter provided by at least one of a communications port receiving environmental information from a remote data source and an environmental sensor and
- estimating, by means of the control unit, tire wear of the tire based on the tire parameter, the driving dynamics parameter and the environmental parameter.

Environmental conditions may have a major impact on a tire environment, e.g., on a road surface contacting the tire. In particular, the environmental parameter may refer to a local weather condition such as, e.g., temperature or humidity or precipitation. The environmental parameter may be regarded as a further tire wear influencing factor and its consideration may serve to perform a more precise estimation of tire wear using the tire parameter, the driving dynamics parameter and the environmental parameter. Additionally or alternatively, the driving dynamics parameter may be processed and evaluated in view of a present environmental condition represented by the environmental parameter, since a driving dynamics behaviour of the vehicle may significantly depend on the environmental condition. The communications port may provide internet access and the environmental information received by a remote data source may, for instance, be weather data transmitted to the control unit via a suitable wireless internet connection. The communications port may be a bidirectional port such that the environmental information may be transmitted depending on provided current global positioning system (GPS) data of the vehicle. Additionally or alternatively to environmental information provided by a remote data source, the vehicle may comprise an on-board environmental sensor such as a temperature sensor or a humidity sensor.

According to a refined embodiment, the environmental parameter may comprise precipitation data. Precipitation may represent a significant environmental condition with a considerable impact on the driving dynamics behaviour of the vehicle and on the tire wear of the tires of the vehicle. Thus, tire wear estimation may be conducted in a more precise manner if precipitation events are explicitly considered upon evaluating environmental parameters. For instance, a predefined value or factor representing a precipitation condition may be assigned to the environmental parameter. Furthermore, the environmental parameter may depend on a sensed or remotely received information regarding precipitation intensity, for instance using a classified environmental parameter which may range from light precipitation to heavy precipitation. The precipitation data may be provided by at least one of the communications ports receiving environmental information from a remote data source and a vehicular sensor, in particular a precipitation sensor which, for instance, may be associated with a windscreen wiper system or a driver assistance system.

According to an embodiment of the first aspect of the present invention, the tire monitoring method may further comprise the steps of
- providing a connection port configured to selectively connect the control unit to a remote control centre and
- transmitting tire-wear data to the remote control centre via the connection port.

By the additional steps described above, it is possible to implement a centralised monitoring of and reaction to a tire wear estimation process, e.g., by centralised maintenance coordination. A remote control centre may, for instance, be a fleet management control centre. The connection port may, for instance, be configured to connect the control unit to a remote control centre via a suitable internet connection or a fleet-specific communication network. The tire-wear data may comprise further vehicular-specific information in addition to the estimated tire wear, such as, e.g., a vehicle identification code and optionally GPS data of the vehicle. According to an advantageous embodiment, the communications port and the connection port may be merged in order to provide a bidirectional communication interface.

According to a refined embodiment, the tire monitoring method may further comprise the steps of
- collecting and evaluating, at the remote control centre, tire-wear data transmitted by control units of a plurality of vehicles and
- receiving, at the control unit, a tire wear assistance information based on the collected and evaluated tire-wear data from the remote control centre.
Hence, data of various vehicles, e.g., fleet vehicles, may be used to perform higher-level evaluation, e.g., for deriving and submitting dynamic tire wear thresholds, coordinating maintenance, providing warning information or for correlating anomalies or increased tire wear effects with geographical relations or specific roads. The tire wear assistance information may, for instance, be a dynamic tire wear threshold for dynamic evaluation of estimated tire wear, a maintenance prompt or a prompt to adjust the driving. In particular, the tire wear assistance information may be output, e.g., displayed, to at least one driver of the plurality of vehicles, or it may be applied to internal processing operations performed by the control unit.

According to a second aspect of the present invention, there is provided a control unit configured to carry out the tire monitoring method according to at least one of the above-mentioned features, wherein the control unit is configured to be connected to a tire sensor or a tire pressure monitoring control device via a first signal connection and wherein the control unit is configured to be connected to a driving dynamics sensor or a driving dynamics control device via a second signal connection.

The suggested control unit according to the second aspect of the invention allows for achieving the above-mentioned advantages of efficient and comfortable tire wear estimation. The control unit may be configured to use a combination of a tire parameter and a driving dynamics parameter representing driving conditions of an associated vehicle in order to assess a present tire wear of at least one tire of the vehicle. Hence, estimating tire wear may be efficiently automated and decoupled from a visual inspection process or at least used to optimize time intervals between visual inspections. Furthermore, the control unit enables a substantially simultaneous analysis of a plurality of tires of the vehicle. At least one of the tire sensor, the tire pressure monitoring control device, the driving dynamics sensor and the driving dynamics control device may be already available on the vehicle and provided sensor data may be shared with the control unit via the first and second signal connection.

As indicated above, the control unit may, for instance, be a dedicated control unit for tire wear estimation or a higher-level control unit combining various vehicular control functions. As described above in connection with the suggested tire monitoring method, the control unit may be configured to receive a tire parameter from the tire sensor or from a tire pressure monitoring control device. Furthermore, the control unit may be configured to receive a driving dynamics parameter from the driving dynamics sensor or from a driving dynamics control device. Generally, the control unit may be any suitable vehicular control unit and, for instance, implemented as a vehicular on-board computer. According to an embodiment, the control unit may be a so-called telematics control unit, which may be an electronic control unit (ECU) with extended telecommunication functions. The control unit may optionally comprise a signal output port for providing visible and/or audible information to a vehicle driver, e.g., by means of a connectable display and/or a connectable loudspeaker. Additionally or alternatively to a permanently installed output device, the control unit may be selectively connectable to a mobile device such as, e.g., a mobile phone or a tablet computer. Hence, the signal output port may be selectively configured to establish a wire-based signal connection and/or a wireless signal connection to the output device.

According to an embodiment of the second aspect of the present invention, the control unit may be configured to be connected to an environmental sensor via a third signal connection. By this, the control unit may receive information on environmental conditions such as, e.g., temperature or humidity, thus enabling the control unit to perform precise tire wear estimation with additional consideration of at least one environmental parameter.

According to an embodiment of the second aspect of the present invention, the control unit may further comprise a communications port configured to receive environmental information from a remote data source. The communications port may, for instance, be provided in addition to or alternatively to a control unit configuration providing a third signal connection to an environmental sensor. By means of the communications port, a sensor-independent and flexible embodiment is provided which allows to consider and process a wide range of environmental conditions by the control unit. For instance, the environmental information provided by the communications port may selectively range from individual environmental parameters such as, e.g., temperature to complex weather situations. The communications port may provide internet access and the environmental information received by a remote data source may, for instance, be weather data transmitted to the control unit via a suitable wireless internet connection. The communications port may be a bidirectional port such that the environmental information may be transmitted depending on provided current global positioning system (GPS) data of the vehicle.

According to an embodiment of the second aspect of the present invention, the control unit may further comprise a connection port configured to selectively connect the control unit to a remote control centre. In this way, the control unit allows implementing a centralized monitoring of and reaction to a tire wear estimation process, e.g. by centralized maintenance coordination. A remote control centre may, for instance, be a fleet management control centre. The connection port may, for instance, be configured to connect the control unit to a remote control centre via a suitable internet connection or a fleet-specific communication network. According to an advantageous embodiment, the communications port and the connection port may be merged in order to provide a bidirectional communication interface.

According to a third aspect of the present invention, there is provided a vehicle, in particular a commercial vehicle, comprising a tire, a tire sensor, a driving dynamics sensor and a control unit according to at least one of the above-mentioned features. The suggested vehicle according to the third aspect of the invention allows for achieving the above-mentioned advantages of efficient and comfortable tire wear estimation. With the suggested vehicle, a combination of a tire parameter provided by the tire sensor and a driving dynamics parameter provided by the driving dynamics sensor may be used to consider tire and driving conditions of the vehicle during its operation in order to assess a present tire wear of a tire, in particular a group of tires or all tires of the vehicle. Hence, estimating tire wear may be efficiently automated and decoupled from a visual inspection process or at least used to optimize time intervals between visual inspections. Furthermore, the vehicle enables a substantially simultaneous analysis of a plurality of tires of the vehicle. At least one of the tire sensor and the driving dynamics sensor may be already available on the vehicle, in particular being assigned to a respective tire pressure monitoring system or to a driving dynamics system, and provided sensor data may be shared with the control unit via suitable signal connections.

The described vehicle may be a motor vehicle of any type designed to transport people and/or cargo. In particular, the vehicle may be a commercial vehicle such as, e.g., a truck or a bus. Due to their generally large dimensions, commercial vehicles may comprise a high number of tires. Furthermore, higher requirements may be present regarding the operational availability of the commercial vehicle due to economic aspects. By providing sensor-assisted tire wear estimation with the vehicle configured as explained above, the advantage of a time-efficient on-board tire monitoring concept may significantly increase the operation efficiency particularly for commercial vehicles.

According to a fourth aspect of the present invention, there is provided a computer program product comprising program code means so as to carry out the tire monitoring method according to any of the above-mentioned features, if the program code means is executed on a computer. In this way, an efficient and flexible appliance is provided to carry out the tire monitoring method. In particular, the computer program product may be configured to conduct the tire wear estimation of the tire based on the tire parameter, the driving dynamics parameter and optionally the environmental parameter being provided as input values. For instance, the computer program product may be configured to calculate an estimated tire wear according to a given tire wear model. Furthermore, the computer program product may be configured to perform a classification of the estimated tire wear, e.g., according to predefined tire wear classification levels or ranges. Based on the estimated tire wear, in particular on a classified tire wear level, the computer program product may output a respective tire wear estimation result, e.g., by issuing a warning notification or of a maintenance prompt. Optionally, the computer program product may be configured to generate and output a visualization and/or an audible information on the estimated tire wear results. The computer program product may be configured to be installed in a vehicular control unit, in particular in the control unit according to at least one of the above-mentioned features. For instance, the control unit may be configured as a vehicular on-board computer with a memory unit and a processor unit, and the program code means may be saved in the memory unit and executed by the processor unit.

The above and other characteristics will become clear from the following description of illustrative, non-restrictive examples, which will be further outlined with reference to the appended drawings. The drawings are not necessarily to scale. Some features could be exaggerated or minimized to show details of particular components. Therefore, specific structural and functional details disclosed herein are not to be interpreted as limiting, but merely as a representative basis for teaching one skilled in the art.
- Fig. 1: shows a simplified schematic side view of a vehicle according to an embodiment.
- Fig. 2: depicts a flow chart of a tire monitoring method according to an embodiment.
- Fig. 3: provides a schematic illustration of a control unit configured to carry out the tire monitoring method according to Fig. 2.

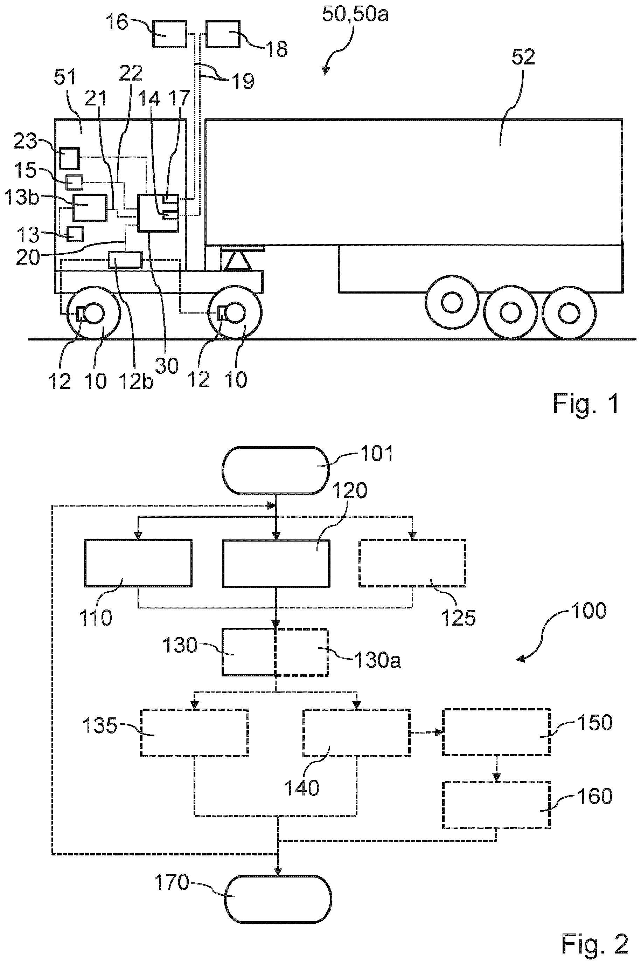

Fig. 1 schematically illustrates a vehicle 50 configured as a commercial vehicle 50a, specifically as a truck with a towing vehicle 51 and a trailer 52. In the following, features of the vehicle 50 will be described with reference to the towing vehicle 51. Nevertheless, the features indicated below may be also applicable to the trailer 52 in analogy.

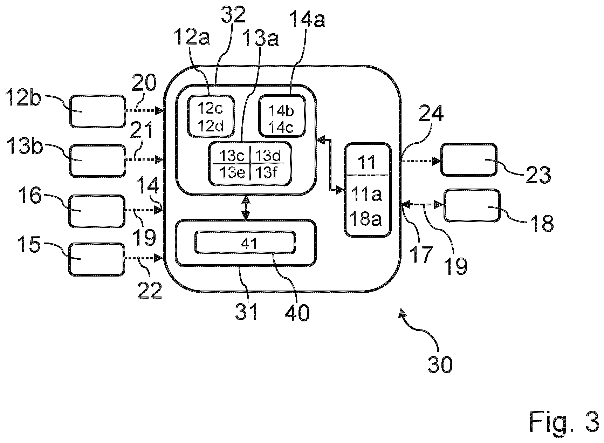

The vehicle 50 comprises a plurality of tires 10, of which two tires 10 are schematically depicted in Fig. 1 as examples. According to the illustrated embodiment, each tire 10 comprises a tire sensor 12 configured to sense a tire pressure 12c and optionally a tire temperature 12d of the tire 10, as further schematically represented by a tire parameter 12a in Fig. 3. Additionally, the vehicle 50 comprises a tire pressure monitoring device 12b, to which the tire sensors 12 are connected via a suitable signal connection. The tire pressure monitoring device 12b may be configured to monitor the tire pressure 12c signaled by the tire sensors 12 and to issue a respective warning if a predefined pressure or temperature threshold is reached.

Additionally, the vehicle 50 comprises a driving dynamics sensor 13, e.g., a steering angle sensor. Generally, the vehicle 50 may comprise a plurality of driving dynamics sensors 13 which may be used to measure and/or calculate driving dynamics parameters such as the brake pedal position, the brake pressure, acceleration etc. The driving dynamics sensor 13 may be configured to provide sensor data referring to at least one driving dynamics parameter 13a, for instance a braking parameter 13c, a steering parameter 13d, an acceleration parameter 13e or a vehicle stability parameter 13f, as further schematically depicted in Fig. 3. The vehicle 50 further comprises a driving dynamics control device 13b, to which the driving dynamics sensor 13 is connected via a suitable signal connection. According to the depicted embodiment, the vehicle 50 furthermore comprises an environmental sensor 15, e.g. a precipitation sensor. The environmental sensor 15 may be configured to provide sensor data regarding an environmental parameter 14a as further depicted in Fig. 3.

Moreover, the vehicle 50 comprises a control unit 30 configured to carry out a tire monitoring method 100 which will be explained in detail below with reference to Fig. 2. The control unit 30 may, for instance, be a dedicated control unit 30 for the tire monitoring method 100 or a higher-level control unit 30 combining various vehicular control functions. Furthermore, the control unit 30 may be a telematics control unit 30 with extended telecommunication functions. According to the illustrated embodiment in Fig. 1, the control unit 30 is connected to the tire pressure monitoring control device 12b via a first signal connection 20. Furthermore, the control unit 30 is connected to the driving dynamics control device 13b via a second signal connection 21. Additionally, the control unit 30 is connected to the environmental sensor 15 via a third signal connection 22. The vehicle 50 may comprise a display 23, which may, for instance, be arranged in a driver cabin of the vehicle 50. Generally, the display 23 may be a permanently installed output device or a mobile output device such as a mobile phone or a tablet. The control unit 30 may be configured to display information via a display output port 24 (see Fig. 3) on the display 23. In particular, the displayed information may be information on tire wear 11 of at least one tire 10 of the vehicle 50 as further explained below. Additionally or alternatively to a providing a display information, the control unit 30 may provide an audible information via a suitable output port to a permanently installed output device and/or to a mobile output device.

According to the embodiment depicted in Fig. 1, the control unit 30 comprises a communications port 14 configured to receive environmental information 14b such as, e.g., precipitation data 14c (see Fig. 3) from a remote data source 16. For instance, the communications port 14 may be connected to the remote data source 16 via a suitable internet connection 19. Additionally, the control unit 30 comprises a connection port 17 configured to selectively connect the control unit 30 to a remote control centre 18, e.g., via an internet connection 19 as schematically illustrated. The remote control centre 18 may, for instance, be a fleet management control centre. Generally, the connection port 17 and the communications port 14 may be merged to provide a common bidirectional interface for interchanging information with remote appliances.

As indicated above, the control unit 30 of the vehicle 50 may be configured to carry out the tire monitoring method 100 schematically depicted in Fig. 2. In order to provide a comprehensive explanation, the tire monitoring method 100 will now be described with reference to Fig. 2 and Fig. 3, wherein Fig. 2 depicts a schematical flow chart of the tire monitoring method 100 according to an embodiment and Fig. 3 provides a more detailed schematic overview of the control unit 30. For instance, it is apparent from Fig. 3 that the control unit 30 may comprise a memory unit 31 storing program code means 41 of a computer program product 40, the control unit 30 further comprising a processor unit 32 configured to execute the program code means 41 so as to carry out the tire monitoring method 100 described below.

From Fig. 2, it is apparent that the tire monitoring method 100 comprises a start 101 for initiating the tire monitoring method 100. For instance, the start 101 may be triggered by a start of operation of the vehicle 50. Subsequently, the tire monitoring method 100 comprises a step 110 of receiving, at the control unit 30, the tire parameter 12a provided by the tire sensor 12. As illustrated in Figs. 1 and 3, the tire parameter 12a is received at the control unit 30 via the tire pressure monitoring device 12b connected to the control unit 30 via the first signal connection 20. The tire parameter 12a may comprise a tire pressure 12c and a tire temperature 12d as apparent from Fig. 3.

Furthermore, the tire monitoring method 100 comprises a step 120 of receiving, at the control unit 30, the driving dynamics parameter 13a provided by the driving dynamics sensor 13 of the vehicle 50. As illustrated in Figs. 1 and 3, the driving dynamics parameter 13a is received at the control unit 30 via the driving dynamics control device 13b connected to the control unit 30 via the second signal connection 21. From Fig. 3 it is apparent that the driving dynamics parameter 13a may comprise at least one of a braking parameter 13c, a steering parameter 13d, an acceleration parameter 13d and a vehicle stability parameter 13f. According to an optional step 125, the control unit 30 may further receive an environmental parameter 14a provided by at least one of the communications ports 14 receiving environmental information 14b from the remote data source 16 and the environmental sensor 15. As illustrated in Figs. 1 and 3, the environmental sensor 15 may be connected to the control unit 30 via the third signal connection 22 and the communications port 14 may be connected to the remote data source 16 via a suitable internet connection 19. According to an advantageous embodiment, the environmental parameter 14a may comprise precipitation data 14c as schematically indicated in Fig. 3. precipitation data 14c may be signalled by at least one of the environmental sensors 15, which may be implemented as a precipitation sensor, and the remote data source 16, e.g., providing weather data as environmental information 14b.

In a step 130, the control unit 30 conducts an estimation of tire wear 11 of at least one tire 10 of the vehicle 50, the estimation of tire wear 11 being based on the tire parameter 12a and the driving dynamics parameter 13a. Alternatively, a step 130a is performed, in which the control unit 30 carries out the estimation of tire wear 11 based on the tire parameter 12a, the driving dynamics parameter 13a and the environmental parameter 14a. The estimation of tire wear 11 may, for instance, comprise calculating the tire wear 11 according to a given tire wear model. Optionally, the calculated tire wear 11 may be classified for simplified further processing.

According to a further step 135, a result of the estimation of tire wear 11 may be displayed to a driver of the vehicle 50, e.g., via the display 23 schematically indicated in Figs. 1 and 3. As depicted in Fig. 3, the control unit 30 comprises a suitable display output port 24 for providing information on the display 23. Additionally or alternatively to the step 135, a further step 140 may comprise transmitting tire-wear data 11a on the estimated tire wear 11 to the remote control centre 18 via the connection port 17. The tire-wear data 11a may comprise further vehicular-specific information in addition to the estimated tire wear 11, such as, e.g., a vehicle identification code and optionally GPS data of the vehicle 50. As schematically indicated in Figs. 1 and 3, the connection port 17 may be connected to the remote control centre 18 via a suitable internet connection 19. Optionally, the step 140 may lead to a further step 150 comprising collecting and evaluating, at the remote control centre 18, tire-wear data 11a transmitted by control units 30 of a plurality of vehicles 50. Furthermore, the step 150 may lead to a further step 160 of receiving, at the control unit 30, a tire wear assistance information 18a (see Fig. 3) based on the collected and evaluated tire-wear data 11a from the remote control centre 18. For instance, the tire wear assistance information 18a may comprise a dynamic tire wear threshold or a maintenance prompt.

The steps described above may be selectively repeated until an end 170 of the tire monitoring method 100 is set, e.g. by stopping operation of the vehicle 50. For instance, the steps 110, 120 and 130 as well as the optional steps 125, 130a, 135, 140, 150, 160 may be repeated continuously or at predefined time intervals.

By means of the tire monitoring method 100, the control unit 30 and the vehicle 50 described above, estimation of tire wear 11 of at least one tire 10 of the vehicle 50 may be provided in a time-efficient and comfortable manner. The suggested tire monitoring concept provides a sensor-based method for estimating tire wear 11 considering not only a tire parameter 12a but also driving conditions and optionally environmental conditions of the vehicle 50 which may have a significant impact on the tire wear 11. The presented on-board approach allows for a reduced need of visual inspection processes and optimizes time intervals between such inspections, which may lead to an increased comfort of the vehicle driver and to a higher operational availability of the vehicle 50.

### List of reference numerals (part of the application):

- 10: tire
- 11: tire wear
- 11a: tire-wear data
- 12: tire sensor
- 12a: tire parameter
- 12b: tire pressure monitoring control device
- 12c: tire pressure
- 12d: tire temperature
- 13: driving dynamics sensor
- 13a: driving dynamics parameter
- 13b: driving dynamics control device
- 13c: braking parameter
- 13d: steering parameter
- 13e: acceleration parameter
- 13f: vehicle stability parameter
- 14: communications port
- 14a: environmental parameter
- 14b: environmental information
- 14c: precipitation data
- 15: environmental sensor
- 16: remote data source
- 17: connection port
- 18: remote control centre
- 18a: tire wear assistance information
- 19: internet connection
- 20: first signal connection
- 21: second signal connection
- 22: third signal connection
- 23: display
- 24: display output port
- 30: control unit
- 31: memory unit
- 32: processor unit
- 40: computer program product
- 41: program code means
- 50: vehicle
- 50a: commercial vehicle
- 51: towing vehicle
- 52: trailer
- 100: tire monitoring method
- 101: start
- 110: receiving tire parameter
- 120: receiving driving dynamics parameter
- 125: receiving environmental parameter
- 130: estimating tire wear with tire/driving dynamics parameter
- 130a: estimating tire wear with tire/driving dynamics/environmental parameter
- 135: displaying estimated tire wear
- 140: transmitting tire-wear data to remote control centre
- 150: collecting and evaluating tire-wear data
- 160: receiving tire wear assistance information
- 170: end

## Claims

1. A tire monitoring method (100) for estimating tire wear (11) of a tire (10) of a vehicle (50), the vehicle (50) comprising a control unit (30) and the tire monitoring method (100) comprising the steps of
- receiving (110), at the control unit (30), a tire parameter (12a) provided by a tire sensor (12) associated with the tire (10),
- receiving (120), at the control unit (30), a driving dynamics parameter (13a) provided by a driving dynamics sensor (13) of the vehicle (50) and
- estimating (130), by means of the control unit (30), tire wear (11) of the tire (10) based on the tire parameter (12a) and the driving dynamics parameter (13a).

2. The tire monitoring method (100) according to claim 1, wherein the tire parameter (12a) is at least one of a tire pressure (12c) and tire temperature (12d).

3. The tire monitoring method (100) according to claim 1 or 2, wherein the driving dynamics parameter (13a) is at least one of
- a braking parameter (13c),
- a steering parameter (13d),
- an acceleration parameter (13e) and
- a vehicle stability parameter (13f).

4. The tire monitoring method (100) according to any preceding claim, wherein the tire monitoring method (100) further comprises the steps of
- receiving (125), at the control unit (30), an environmental parameter (14a) provided by at least one of a communications port (14) receiving environmental information (14b) from a remote data source (16) and an environmental sensor (15) and
- estimating (130a), by means of the control unit (30), tire wear (11) of the tire (10) based on the tire parameter (12a), the driving dynamics parameter (13a) and the environmental parameter (14a).

5. The tire monitoring method (100) according to claim 4, wherein the environmental parameter (14a) comprises precipitation data (14c).

6. The tire monitoring method (100) according to any preceding claim, wherein the tire monitoring method (100) further comprises the steps of
- providing a connection port (17) configured to selectively connect the control unit (30) to a remote control centre (18) and
- transmitting (140) tire-wear data (11a) on the estimated tire wear (11) to the remote control centre (18) via the connection port (17).

7. The tire monitoring method (100) according to claim 6, wherein the tire monitoring method (100) further comprises the steps of
- collecting and evaluating (150), at the remote control centre (18), tire-wear data (11a) transmitted by control units (30) of a plurality of vehicles (50) and
- receiving (160), at the control unit (30), tire wear assistance information (18a) based on the collected and evaluated tire-wear data (11a) from the remote control centre (18).

8. A control unit (30) configured to carry out the tire monitoring method (100) according to at least one of the preceding claims, wherein the control unit (30) is configured to be connected to a tire sensor (12) or a tire pressure monitoring control device (12b) via a first signal connection (20) and wherein the control unit (30) is configured to be connected to a driving dynamics sensor (13) or a driving dynamics control device (13b) via a second signal connection (21).

9. The control unit (30) according to claim 8, wherein the control unit (30) is configured to be connected to an environmental sensor (15) via a third signal connection (22).

10. The control unit (30) according to claim 8 or 9, wherein the control unit (30) further comprises a communications port (14) configured to receive environmental information (14b) from a remote data source (16).

11. The control unit (30) according to any of claims 8 to 10, wherein the control unit (30) further comprises a connection port (17) configured to selectively connect the control unit (30) to a remote control centre (18).

12. A vehicle (50), in particular a commercial vehicle (50a), comprising a tire (10), a tire sensor (12), a driving dynamics sensor (13) and a control unit (30) according to any of claims 8 to 11.

13. A computer program product (40) comprising program code means (41) so as to carry out the tire monitoring method (100) according to any of claims 1 to 7 when the program code means (41) are executed on a computer.
